Europäisches Patentamt

(19) European Patent Office

Office européen des brevets

(11) Numéro de publication: **0 278 873**
**B1**

(12) **FASCICULE DE BREVET EUROPEEN**

(45) Date de publication du fascicule du brevet:
**14.03.90**

(21) Numéro de dépôt: **88420020.5**

(22) Date de dépôt: **22.01.88**

(51) Int. Cl.⁴: **F17C 13/00, F16L 37/12**

(54) Système d'accouplement d'un appareil et d'une cartouche, et appareil à gaz incorporant un tel système.

(30) Priorité: **27.01.87 FR 8701097**

(43) Date de publication de la demande:
**17.08.88 Bulletin 88/33**

(45) Mention de la délivrance du brevet:
**14.03.90 Bulletin 90/11**

(84) Etats contractants désignés:
**DE ES FR GB IT NL SE**

(56) Documents cités:
**EP-A- 0 001 960**
**FR-A- 2 353 793**
**FR-A- 2 376 999**

(73) Titulaire: **APPLICATION DES GAZ, 173, rue de Bercy,**
**F-75012 Paris(FR)**

(72) Inventeur: **Finand, Daniel, 48 rue Ernest Renand,**
**F-69200 Venissieux(FR)**
Inventeur: **Scremin, Gérard, 147 boulevard Pinel,**
**F-69500 Bron(FR)**

(74) Mandataire: **Guerre, Dominique et al, CABINET**
**GERMAIN et MAUREAU Le Britannia Tour C 20 Bd E.**
**Deruelle, F-69392 Lyon Cédex 03(FR)**

ACTORUM AG

## Description

La présente invention concerne un système d'accouplement d'une cartouche d'un fluide sous pression et d'un appareil consommant ce fluide.

Les cartouches envisagées par l'invention sont des récipients, jetables ou rechargeables, comportant une valve de prélèvement, par exemple du type valve aérosol, et par construction un bourrelet annulaire à distance et autour de la tête de valve, ménageant une possibilité d'accrochage à l'intérieur ou à l'extérieur, sous ledit bourrelet. Préférentiellement, mais de manière non limitative, les cartouches envisagées par l'invention sont des boites sur lesquelles des valves aérosol sont serties, et contenant un gaz de pétrole liquéfié, par exemple du butane.

Par appareil, au sens de l'invention, on entend tout dispositif, matériel, consommant, à des fins diverses, le fluide sous pression contenu dans la cartouche.

Par accouplement, on entend tout système accomplissant simultanément deux fonctions, d'une part un montage rigide de la cartouche sur l'appareil, et d'autre part une ouverture de la valve, avec liaison étanche entre la cartouche et l'appareil.

Selon le brevet FR-A 2 407 423, et notamment selon le mode d'exécution conforme aux figures 12 et 13, on a proposé un système d'accouplement comprenant :
- un noyau central solidaire, c'est-à-dire faisant partie de l'appareil, comportant des moyens de prélèvement de fluide, à savoir un tube entouré d'un joint annulaire d'étanchéité, coopérant de manière étanche avec la tête de valve de ladite cartouche, un conduit d'acheminement de fluide prélevé vers l'appareil, communiquant avec le tube, ainsi qu'une portée oblique et annulaire située à l'extrémité inférieure du noyau ; ce noyau est en outre fileté extérieurement ;
- une pièce annulaire obtenue de manière monobloc en matière plastique, comportant un taraudage central, pour coopérer avec le filetage du noyau central, une pluralité de pinces d'accrochage, ayant chacune la forme d'un mors élastique ; ce dernier comprend vers l'extérieur un talon d'accrochage à l'intérieur et sous le bourrelet annulaire de la cartouche, et vers l'intérieur une saillie avec surface oblique, formant élément de poussée du talon d'accrochage vers la paroi en creux du bourrelet annulaire, lorsque, par vissage, la portée annulaire du noyau central vient en appui contre cette saillie ;
- des moyens pour rendre inséparable la pièce annulaire du noyau central.

Grâce à la coopération de la portée annulaire du noyau central et des mors élastiques, on obtient un verrouillage positif, réversible, de l'appareil sur la cartouche.

La présente invention a pour object des moyens d'inséparabilité :
. invisibles de l'utilisateur, donc évitant la tentation d'un démontage complet du système d'accouplement, lequel serait alors dangereux, l'appareil ne pouvant être accoupé à la cartouche sans sa pièce annulaire,
. particulièrement efficaces, lorsque le noyau central est dévissé de la pièce annulaire, c'est-à- dire interdisant un dévissage complet,
. et réalisables en matière plastique, d'un seul tenant avec la pièce annulaire.

Selon l'invention, en combinaison :
- une gorge est ménagée sur le noyau central, à l'intérieur de la pièce annulaire, lorsque le noyau central et la pièce annulaire sont assemblés de manière inséparable ; le fond de cette gorge s'étend, selon l'axe du noyau, à partir de la portée annulaire inférieure, sur une distance au moins égale à la course nécessaire pour appuyer sur et repousser les mors élastiques contre le bourrelet annulaire de la cartouche, par vissage du noyau sur la pièce annulaire ;
- au moins une dent d'inséparabilité est disposée sur la pièce annulaire, en saillie vers l'intérieur du taraudage ; son extrémité est en retrait par rapport à celles des pinces d'accrochage.

Ainsi, lors du premier vissage, par exemple lors du montage de la pièce annulaire sur le noyau central, la ou les dents d'inséparabilité sont tout d'abord repoussées vers l'extérieur par la portée annulaire du noyau central, puis retombent de manière définitive dans la gorve.

Par dévissage, les dents d'inséparabilité viennent en butée contre le rebord inférieur de la gorge, et se bloquent contre celui-ci, sans possibilité de démontage complet.

La présente invention est maintenant décrite part référence aux dessins annexés dans lesquels :

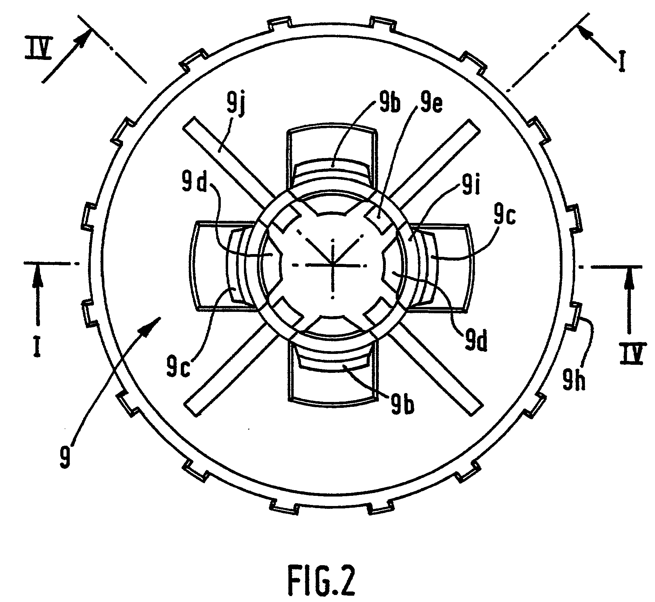

- la figure 1 représente un système d'accouplement selon l'invention, monté et bloqué positivement sur la valve d'une cartouche, avec un arrachement partiel selon la section en coupe verticale référencée I-I sur la figure 2, seule la pièce annulaire, à l'exclusion du noyau central, étant montrée sur cette figure ;
- la figure 2 représente une vue de dessus de la pièce annulaire faisant partie d'un système selon l'invention ;

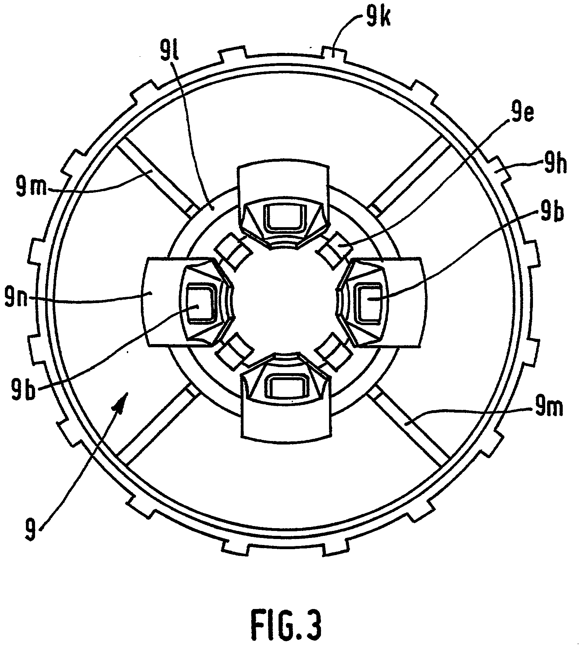

- la figure 3 représente une vue de dessous de la même pièce annulaire ;
- la figure 4 représente une vue en section verticale selon la ligne IV-IV de la figure 2.

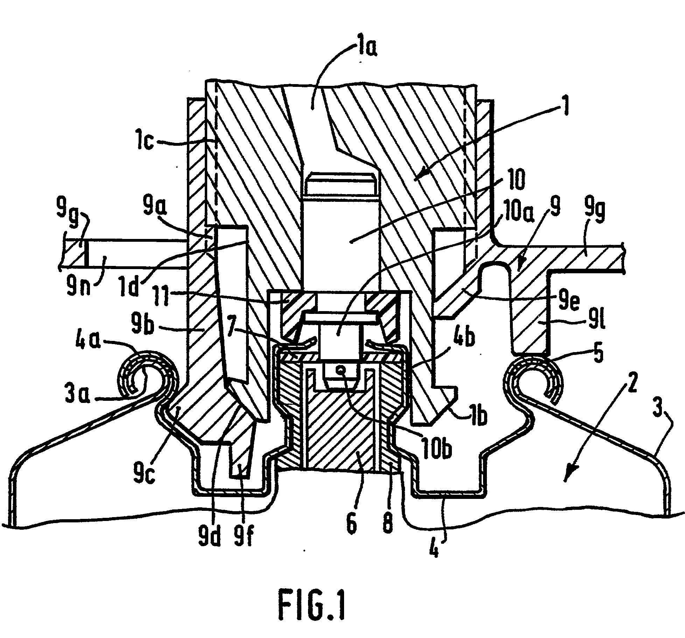

Un système d'accouplement selon l'invention est destiné à coopérer avec une cartouche de gaz de pétrole liquéfié, par exemple de butane, montrée selon la référence (2) à la figure 1. Cette cartouche comprend un corps (3), une boite en fer blanc par exemple, sur lequel est sertie une valve (4) avec sa coupelle, grâce à des rebords (3a) et (4a), enroulés l'un sur l'autre, avec un joint d'étanchéité (5). La tête de valve (4b) comporte, à l'intérieur de la coupelle, un clapet (6) faisant étanchéité contre un joint plat (7), repoussé par un ressort non représenté, fixé dans le corps (8) de la valve, la tête (4b) étant sertie sur ce dernier.

Le système d'accouplement selon l'invention présente deux parties essentielles, à savoir un noyau central (1) et une pièce annulaire (9), décrits ci-après. Le noyau central (1) est solidaire et fait partie de l'appareil à gaz comportant un système d'accouplement selon l'invention. Il comporte des moyens de prélèvement du butane, à l'intérieur de la cartouche, consistant en, d'une part une tête de prélèvement (10) sertie sur ledit noyau, prolongée vers le bas par un tube (10a) avec un orifice de prélèvement (10b), et d'autre part, un joint annulaire (11), tenu entre un épaulement et un rebord annulaire de la tête de prélèvement (10), faisant étanchéité avec la tête (4b) de la valve et avec le noyau central (1). Des moyens d'acheminement du gaz prélevé sont prévus sous la forme d'un canal (1a) en communication avec la tête de prélèvement (10). Une portée annulaire, sous la forme d'un chanfrein oblique (1b), est prévue à l'extrémité inférieure du noyau central (1). Ce dernier est fileté extérieurement selon la référence numérique (1c).

Selon l'invention, une gorge (1d) est ménagée sur le noyau central, à l'intérieur de la pièce annulaire (9), comme le montre la figure 1, lorsque le noyau (1) et la pièce (9) sont assemblés de manière inséparable. Le fond de la gorge (1d) s'étent selon l'axe du noyau, à partir de la portée annulaire (b), sur une certaine hauteur, dont la valeur sera précisée ci-après.

La pièce annulaire (9) comporte un taraudage central (9a), destiné à coopérer par vissage avec le filetage (1c) du noyau central.

Cette pièce comporte quatre pinces d'accrochage (9b), séparées angulairement les unes des autres par un angle de 90°C. Chaque pince d'accrochage (9b) a, à sa partie inférieure, la forme d'un mors élastique, comprenant vers l'extérieur un talon (9c) d'accrochage, à l'intérieur et sous le bourrelet annulaire (3a, 4a) de la cartouche (3), et vers l'intérieur une saillie (9d) avec surface oblique, formant, comme montré ci-après, élément de poussée du talon (9c) vers la paroi (4a) en creux du bourrelet annulaire de la cartouche (2).

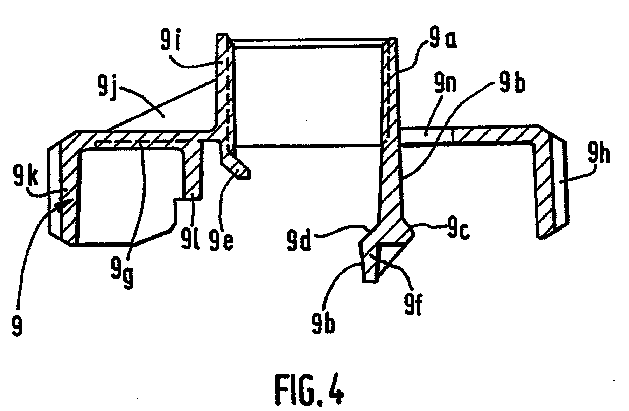

Quatre dents (9e) d'inséparabilité, sont disposées sur la pièce (9), entre les pinces d'accrochage (9b), et sont donc séparées les unes des autres par un angle de 90°. Comme le montre la figure 1 ou la figure 4, chaque dent (9e) a une extrémité en saillie vers l'intérieur du taraudage (9a), et en retrait par rapport aux extrémités des pinces d'accrochage (9b).

La pièce annulaire (9) présente encore les particularités suivantes :
- les pinces d'accrochage (9b) et les dents d'inséparabilité (9e) sont réparties sur le pourtour du taraudage central (9a) ;
- chaque pince d'accrochage (9b) est prolongée, au delà du talon d'accrochage (9c) et de l'élément de poussée (9d), par une partie (9f), venant éventuellement au contact du fond de la valve (4), et dont le rôle sera précisé ci-après ;
- une collerette annulaire (9g) forme l'ossature de la pièce annulaire (9) ; à partir de cette collerette, une cheminée (9i), formant le taraudage central (9a), s'élève à l'extérieur de ladite collerette, tandis que les pinces d'accrochage (9b) et les dents (9e) d'inséparabilité sont disposées dans le prolongement de la cheminée précitée (9i), à l'intérieur de la pièce annulaire (9); la cheminée (9i) est reliée à la collerette (9g) par des nervures radiales extérieures (9j) ;
- deux rebords, l'un extérieur (9k) et l'autre intérieur (9l) sont ménagés sous forme annulaire, perpendiculairement à la collerette (9g) ; comme on le verra ci-après, le rebord annulaire interne (9l) est destiné à venir au contact du bourrelet annulaire (3a,4a) de la cartouche (2) ;
- des nervures internes (9m) relient le rebord (9k) et le rebord (9l) ; le rebord (9k) est molleté extérieurement selon (9h) ;
- des ouvertures (9n) sont ménagées sur la collerette (9g), de manière adjacente aux pinces (9b) ;
- la pièce annulaire est obtenue de manière monobloc, par moulage d'une matière plastique adéquate.

Le fonctionnement du système d'accouplement selon l'invention est le suivant.

En vissant, pour la première fois, le noyau central (1) sur la pièce annulaire (9), la portée annulaire (1b) du noyau repousse vers l'extérieur les dents d'inséparabilité (9e), lesquelles retombent ensuite de manière définitive dans la gorge (1d). De cette manière, la pièce annulaire (9) et le noyau (1), faisant partie d'un appareil à gaz, sont assemblés de manière irréversible.

Le fonctionnement du système d'accouplement selon l'invention, est ensuite le suivant.

En tournant la pièce annulaire (9), dans le sens des aiguilles d'une montre, par rapport au noyau central (1), on amène la portée annulaire (1b) de ce dernier, au niveau supérieur des pinces d'accrochage (9b). Dès lors, ces dernières ont toutes leur flexibilité, et il est possible, par simple poussée de l'appareil vers la valve (4) de la cartouche (2), d'encliqueter les talons d'accrochage (9c) sous le rebord annulaire (3a,4a) de la cartouche (2). Puis, en tournant la pièce annulaire (9), dans le sens inverse des aiguilles d'une montre, par rapport au noyau (1), il est possible de descendre la même portée annulaire (1b), en appui sur les éléments de poussée (9d) des pinces d'accrochage (9b) ; dès lors, en poursuivant la rotation de la pièce (9), les talons d'accrochage (9c) sont repoussés positivement sous et contre le bourrelet annulaire précité, contre lequel ils se bloquent. Lors de ce mouvement descendant de la tête (1), par rapport à la pièce annulaire (9), le joint d'étanchéité vient au contact de la tête de valve (4b), tandis que le tube de prélèvement (10a) pénètre à l'intérieur de cette dernière, en repoussant le clapet (6) de la valve. A la fin de ce mouvement, la tête (1) est fixée de manière rigide sur la valve (4), tandis qu'une liaison étanche est établie entre la valve ouverte de la cartouche et l'appareil.

Pour désassembler l'appareil et la cartouche, on procède de manière inverse à celle décrite précédemment.

On observera que le fond de la gorge (1d) s'étend selon l'axe du noyau (1), sur une hauteur au moins égale à la course nécessaire, par vissage du noyau (1) en relation avec la pièce annulaire (9), pour appuyer et repousser les mors élastiques (9b) contre le bourrelet annulaire (3a,4a).

Si un utilisateur visse compètement la pièce annulaire (9), par rapport au noyau (1), dans le sens des aiguilles d'une montre, les dents d'inséparabilité (9e) viennent au contact de l'extrémité inférieure de la gorge (1d), contre la partie chanfreinée (1b). Elles s'opposent ainsi à tout vissage supplémentaire, et par conséquent, à tout démontage de la pièce (9) par rapport au noyau (1).

Les différentes cartouches actuellement disponibles sur le marché, ayant une valve aérosol, présentent des formes de valve et/ou des dimensions différentes d'un fabricant à un autre. Or, s'agissant de cartouches de gaz combustible liquéfié, il est essentiel que l'utilisateur ne puisse assembler son appareil qu'avec une cartouche prévue pour lui. A cette fin, selon l'invention, la valve (4) présente une coupelle plus profonde que celle de la plupart des valves disponibles dans le commerce, et en correspondance, les pinces (9b) présentent le prolongement (9f) précédemment décrit, empêchant tout branchement sur des cartouches ayant une valve moins profonde.

La présente invention s'applique à tous appareils à gaz, notamment pour la cuisson, l'éclairage, le soudage, fonctionnant à partir de cartouche de gaz combustible liquéfié.

**Revendications**

1/ Système d'accouplement d'un appareil sur une cartouche (2) de fluide sous pression, laquelle comprend une valve (4) de prélèvement et un bourrelet annulaire (3a, 4a) entourant la tête (4b) de valve, ledit système comprenant :
- un noyau central (1) solidaire dudit appareil, comportant des moyens de prélèvement (10a, 11) du fluide, destinés à coopérer de manière étanche avec la tête de valve de ladite cartouche, des moyens d'acheminement (1a) du fluide prélevé vers l'appareil, ainsi qu'une portée annulaire (1b) située à la partie inférieure dudit noyau, ce dernier étant fileté (1c) extérieurement ;
- une pièce annulaire (9) comportant un taraudage central (9a), coopérant avec le filetage (1c) du noyau central, une pluralité de pinces d'accrochage (9b), ayant chacune la forme d'un mors élastique, lequel comprend vers l'extérieur un talon (9c) d'accrochage à l'intérieur et sous le bourrelet annulaire de la cartouche, et vers l'intérieur une saillie (9d) avec surface oblique, formant élément de poussée du talon d'accrochage vers la paroi en creux du bourrelet annulaire, lorsque, par vissage, la portée annulaire du noyau central vient en appui contre ladite saillie ;
- des moyens pour rendre inséparable la pièce annulaire du noyau central
caractérisé en ce que les moyens d'inséparabilité comprennent :
- une gorge (1d) ménagée sur le noyau central, située à l'intérieur de la pièce annulaire, lorsque ledit noyau central et ladite pièce annulaire sont assemblées de manière inséparable, et dont le fond s'étend selon l'axe dudit noyau, à partir de la portée annulaire, sur une distance au moins égale à la course nécessaire, par vissage dudit noyau par rapport à la pièce annulaire, pour appuyer et repousser les mors élastiques contre le bourrelet annulaire ;
- au moins une dent d'inséparabilité (9e), faisant partie de la pièce annulaire, en saillie vers l'intérieur du taraudage (9a), dont l'extrémité est en retrait par rapport à celles des pinces d'accrochage, susceptible, lors du premier vissage du noyau central sur la pièce annulaire, d'être vissage du noyau central sur la pièce annulaire, d'être repoussée vers l'extérieur par la portée annulaire, puis de retomber de manière définitive dans la gorge.

2/ Système selon la revendication 1, caractérisé en ce qu'une pluralité de dents d'inséparabilité est répartie, entre les pinces d'accrochage, sur le pourtour du taraudage central de la pièce annulaire.

3/ Système selon la revendication 1, caractérisé en ce que chaque pince d'accrochage est prolongée, au-delà du talon d'accrochage (9c) et de l'élément de poussée (9d), par une partie (9f) venant éventuellement au contact du fond de la valve.

4/ Système selon la revendication 2, selon lequel la pièce annulaire comprend une collerette (9g), molletée extérieurement, caractérisé en ce qu'une cheminée (9i) formant taraudage central est disposée à l'extérieur de ladite pièce, tandis que les pièces d'accrochage et les dents d'inséparabilité sont disposées dans le prolongement de la cheminée, à l'intérieur de ladite pièce annulaire.

5/ Système selon la revendication 4, caractérisé en ce que la cheminée (9i) est reliée à la collerette par une pluralité de nervures radiales extérieures (9j).

6/ Système selon la revendication 4, caractérisé en ce que des ouvertures (9n) sont ménagées sur la collerette, de manière adjacente aux pinces.

7/ Système selon la revendication 4, caractérisé en ce qu'un rebord interne (9l), annulaire, est disposé à l'intérieur de la collerette, pour venir au contact et sur le bourrelet annulaire de la cartouche.

8/ Système selon la revendication 7, caractérisé en ce que des nervures radiales internes (9m) relient le rebord interne et un rebord externe prévu sur la collerette.

9/ Appareil à gaz, destiné notamment à la cuisson, à l'éclairage, le soudage, fonctionnant à partir de cartouches de gaz combusible liquéfié, caractérisé en ce qu'il incorpore un système d'accouplement selon l'une quelconque des revendications 1 à 8.

**Patentansprüche**

1. System zum Ankuppeln eines Gerätes an eine unter Druck stehendes Fluid enthaltende Kartusche (2), das ein Entnahmeventil (4) und einen den Kopf (4b) des Ventils umgebenden Ringwulst (3a, 4a) aufweist und aus folgenden Elementen besteht:
Einem zentralen Kern (1), der an dem genannten Gerät fest angebracht ist und Entnahmemittel (10a, 11) für das Fluid aufweist, die wie eine Dichtung mit dem Kopf des Ventils der Kartusche zusammenwirken sollen, Fördermittel (1a) für das zum Gerät geförderte Fluid, sowie einen Tragring (1b), der unterhalb des Kerns angeordnet ist, welcher mit einem Außengewinde (1c) versehen ist; einem Ringstück (9) mit einem zentralen Innengewinde (9a), welches mit dem Außengewinde (1c) des zentralen Kerns zusammenwirkt, mehrere Verankerungsklauen (9b), von denen jede die Form einer elastischen Backe hat, welche nach außen zu einen Verankerungshaken (9c) bildet, der ins Innere und unter die Ringwulst der Kartusche greift, und nach innen zu einen Rand (9d) mit schräger Oberfläche aufweist, der ein Stoßelement des Verankerungshakens in Richtung auf die Wand in der Mulde der Ringwulst bildet, sobald der Tragring des zentralen Kerns durch Aufschrauben gegen den genannten Rand stößt; ferner Mittel, durch die ein Abtrennen des Ringstücks vom zentralen Kern verhindert wird, dadurch gekennzeichnet, daß die Mittel zur Verhinderung des Abtrennens eine in den zentralen Kern eingearbeitete Nut (1d) aufweisen, die sich im Innern des Ringstücks befindet, sobald der genannte zentrale Kern und das genannte Ringstück untrennbar zusammengebaut sind, wobei sich der Boden der Nut in Richtung der Achse des Kerns ausgehend von dem ringförmigen Bereich erstreckt, und zwar über eine Entfernung, die wenigstens gleich der Strecke ist, die erforderlich ist, um den Kern in bezug auf das Ringstück zu verschrauben, um die elastischen Backen an der Ringwulst zur Anlage zu bringen und zurückstoßen zu lassen; wenigstens einen untrennbaren Zahn (9e), der als Teil des Ringstücks ins Innere des Innengewindes (9a) ragt und dessen äußeres Ende in bezug auf diejenigen Verankerungsklauen zurückgezogen ist, die beim ersten Aufschrauben des zentralen Kerns auf das Ringstück durch den ringförmigen Bereich nach außen zurückgestoßen werden können, um danach definitiv in die Nut zurückzuweichen.

2. System nach Anspruch 1, dadurch gekennzeichnet, daß eine Vielzahl von untrennbaren Zähnen zwischen den Verankerungsklauen auf dem Umfang des zentralen Innengewindes des Ringstücks verteilt sind.

3. System nach Anspruch 1, dadurch gekennzeichnet, daß jede Verankerungsklaue über den Verankerungswulst (9c) und das Stoßelement (9d) hinaus durch einen Teil (9f) verlängert ist, der eventuell mit dem Boden des Ventils in Berührung tritt.

4. System nach Anspruch 2, wobei das Ringstück einen außen gerändelten Kragen (9g) aufweist, gekennzeichnet durch einen Kamin (9i), der ein zentrales Innengewinde bildet und außerhalb des genannten Stücks angeordnet ist, während die Verankerungstücke und die untrennbaren Zähne in der Verlängerung des Kamins liegen, innnerhalb des genannten Ringstücks.

5. System nach Anspruch 4, dadurch gekennzeichnet, daß der Kamin (9i) durch mehrere radiale äußere Rippen (9j) mit dem Kragen verbunden ist.

6. System nach Anspruch 4, dadurch gekennzeichnet, daß Öffnungen (9n) im Kragen so ausgebildet sind, daß sie neben den Klauen liegen.

7. System nach Anspruch 4, gekennzeichnet durch einen inneren ringförmigen Rand (91), der innerhalb des Kragens angeordnet ist, um mit dem Ringwulst der Kartusche in Berührung zu treten.

8. System nach Anspruch 7, dadurch gekennzeichnet, daß innere radiale Rippen (9m) den inneren Rand und einen äußeren, auf dem Kragen vorgesehenen Rand verbinden.

9. Gasgerät, insbesondere zum Kochen, Heizen, Schweissen, das mit Kartuschen zusammenwirkt, die brennbares Flüssiggas enthalten, dadurch gekennzeichnet, daß das Gerät ein Kupplungssystem gemäß einem der Ansprüche 1 bis 8 aufweist.

**Claims**

1. System for coupling an appliance to a cartridge (2) of pressurized fluid which comprises a draw-off valve (4) and an annular bead (3a, 4a) surrounding the valve head (4b), the said system comprising:
   - a central core (1) integral with the said appliance and comprising means (10a, 11) for drawing off the fluid, intended for interacting sealingly with the valve head of the said cartridge, means (1a) for conveying the drawn-off fluid towards the appliance, and an annular bearing surface (1b) located in the lower part of the said core, the latter having an external thread (1c);
   - an annular part (9) comprising a central internal thread (9a) interacting with the thread (1c) of the central core, and a plurality of fastening grippers (9b), each having the form of an elastic jaw comprising, towards the outside, a heel (9c) for fastening on the inside and under the annular bead of the cartridge and, towards the inside, a projection (9b) with a sloping surface, forming an element for pushing the fastening heel towards the recessed wall of the annular bead when the annular bearing surface of the central core comes up against the said projection as a result of screwing;
   - means for making the annular part inseparable from the central core, characterized in that the means of inseparability comprise:
   - a groove (1d) which is made in the central core and is located on the inside of the annular part when the said central core and the said annular part are joined together inseparably, and the bottom of which extends, in the axis of the said core, from the annular bearing surface over a distance at least equal to the travel necessary for pressing on and pushing the elastic jaws against the annular bead as a result of the screwing of the said core in relation to the annular part;
   - at least one inseparability tooth (9e) which forms part of the annular part and projects towards the inside of the internal thread (9a), and the end of which is set back from those of the fastening grippers, and which, during the first screwing of the central core on the annular part, is capable of being pushed outwards by the annular bearing surface and then dropping permanently into the groove.

2. System according to Claim 1, characterized in that a plurality of inseparability teeth is distributed over the periphery of the central internal thread of the annular part between the fastening grippers.

3. System according to Claim 1, characterized in that each fastening gripper is extended, beyond the fastening heel (9c) and the pushing element (9d), by a part (9f) which, where appropriate, comes in contact with the bottom of the valve.

4. System according to Claim 2, according to which the annular part has an externally knurled collar (9g), characterized in that a shaft (9i) forming the central internal thread is arranged on the outside of the said part, whilst the fastening grippers and the inseparability teeth are arranged in the extension of the shaft on the inside of the said annular part.

5. System according to Claim 4, characterized in that the shaft (9i) is connected to the collar by means of a plurality of outer radial ribs (9j).

6. System according to Claim 4, characterized in that orifices (9n) are made in that collar so as to be adjacent to the grippers.

7. System according to Claim 4, characterized in that an inner annular rim (91) is arranged on the inside of the collar, to come into contact with and on the annular bead of the cartridge.

8. System according to Calim 7, characterized in that inner radial ribs (9m) join the inner rim and an outer rim provided on the collar.

9. Gas appliance intended particularly for cooking, lighting or welding and operating from cartridges of liquefied combustible gas, characterized in that it incorporates a coupling system according to any one of Claims 1 to 8.

FIG.1

FIG.2

FIG.3

FIG. 4